# EUROPEAN PATENT SPECIFICATION

(11) **EP 2 298 594 B1**
(45) Date of publication and mention of the grant of the patent: **16.11.2011**
(21) Application number: 10176195.5
(22) Date of filing: 10.09.2010
(51) Int. Cl.: B60N 2/42, B60R 21/00, B62J 1/12, B62J 27/00

(54) **Occupant restraining apparatus for a motorcycle**
Insassen-Rückhaltevorrichtung für ein Motorrad
Appareil de retenue de l'occupant pour motocyclette

(30) Priority: 15.09.2009 JP 2009213113
(43) Date of publication of application: 23.03.2011
(73) Proprietor: Honda Motor Co., Ltd., Tokyo 107-8556 (JP)
(72) Inventor: Kizaki, Tokujiro c/o HONDA R&D CO., LTD., Saitama 351-0193 (JP)
(74) Representative: Beder, Jens

(56) References cited:
- US-A- 4 299 406
- US-A1- 2006 066 091
- US-A1- 2009 127 835
- US-B1- 6 305 744

## Description

This invention relates to an occupant restraining apparatus for a motorcycle.

Conventionally, various motorcycles which include an airbag and/or a seatbelt have been proposed (refer to, for example, Document JP-A-2003 276668 (figure 1 and figure 5)).

As shown in figure 1 of JP-A-2003 276668, at a rear portion of a vehicle body (16) (the reference numeral in parentheses indicates a reference numeral described in Document JP-A-2003 276668 : this similarly applies also to the description given below) of a motorcycle, connection means (29) is provided, and the waist part of an occupant seated on a seat (12) is fixed by a seatbelt (24) of this connection means (29). Operation upon collision of the motorcycle is described below.

If the motorcycle collides, then since an airbag (19) provided at a front portion of the vehicle body (16) is inflated and expanded as shown in figure 5 of Document JP-A-2003 276668, the impact force which acts upon the occupant can be absorbed by the airbag (19). Further, when a predetermined interval of time elapses after the airbag (19) starts the inflation and expansion, a tongue (27) is automatically disconnected from a buckle (28), the fixation of the occupant by the seatbelt (24) can be cancelled upon falling down after the collision.

Incidentally, in the motorcycle of Document JP-2003 276668, although the occupant can be released from the motorcycle because the fixation of the occupant by the seatbelt (24) is cancelled upon falling down after collision, it is more preferable if the occupant can be released more smoothly.

Therefore, an occupant restraining apparatus for a motorcycle which can release an occupant more smoothly is demanded.

Attention is also drawn to the documents US-A-4299406 and US-B-6305744.

It is a subject of the present invention to provide an occupant restraining apparatus for a motorcycle which can release an occupant smoothly from a vehicle body upon falling down.

According to the invention as set forth in claim 1, an occupant restraining apparatus for a motorcycle which includes an occupant's seat provided on a vehicle body and adapted to be seated by an occupant and a seatbelt provided on the occupant's seat and adapted to fix the occupant is characterized in that the occupant's seat includes a releasing mechanism which allows release thereof from the vehicle body together with the occupant when the vehicle falls down, the occupant's seat includes an impact absorbing member built in a rear portion thereof, the impact absorbing member expands when the occupant's seat is released from the vehicle body, and the occupant's seat includes restriction means for stopping the occupant's seat from being released forwardly.

According to the invention as set forth in claim 2, the occupant restraining apparatus is characterized in that the impact absorbing member is an airbag.

According to the invention as set forth in claim 3, the occupant restraining apparatus is characterized in that the releasing mechanism is released from the vehicle body in response to detection of falling down of the vehicle, and the falling down detection detects at least one of an inclination angle of the vehicle body, a seat load and a step load to decide inclination of the vehicle body and a state of the occupant by means of a control section provided on the vehicle body.

According to the invention as set forth in claim 4, the occupant restraining apparatus is characterized in that a tongue provided on the seatbelt is removably connected to a buckle provided on the occupant's seat and a seatbelt detection section is provided on the buckle such that, when the seatbelt detection section detects that the occupant does not wear the seatbelt as yet, the seatbelt detection section sends a signal to a warning notification section provided on the vehicle body so that the warning notification section issues a seatbelt wearing warning to the occupant.

With the invention as set forth in claim 1, since the occupant's seat includes the releasing mechanism which allows release thereof from the vehicle body together with the occupant when the vehicle falls down, when the vehicle falls down, the occupant's seat can be released smoothly from the vehicle body. According to claim 1, an occupant restraining apparatus for a motorcycle which allows the occupant from being released smoothly from the vehicle body upon falling down can be provided.

Further, since the occupant's seat is released while the occupant remains seated thereon, when the occupant's seat lands on the ground surface, it can be expected to interpose the occupant's seat between the occupant and the ground surface.

With the invention as set in claim 1, since the impact absorbing member built in the rear portion of the occupant's seat expands when the occupant's seat is released from the vehicle body, the occupant can be covered with the occupant's seat and the impact absorbing member. In other words, the impact absorbing member can be interposed between the occupant and the ground surface or the like.

With the invention as set forth in claim 2, since the impact absorbing member is an airbag, the occupant can be covered with the occupant's seat and the airbag. In other words, the airbag can be interposed between the occupant and the ground surface or the like.

With the invention as set forth in claim 3, since the falling down detection detects at least one of the inclination angle of the vehicle body, the seat load and the step load to decide inclination of the vehicle body and the state of the occupant by means of the control section provided on the vehicle body, the falling down detection of the vehicle can be carried out with certainty. By the carrying out of the falling down detection with certainty, when the vehicle falls down, the occupant's seat can be released from the vehicle body with certainty.

With the invention as set forth in claim 4, when the seatbelt detection section detects that the occupant does not wear the seatbelt as yet, it sends a signal to the warning notification section provided on the vehicle body, and the warning notification section issues a seatbelt wearing warning to the occupant. Therefore, it is possible to urge the occupant to wear the seatbelt with certainty.

FIG. 1 is a left side elevational view of a motorcycle.
FIG. 2 is an exploded view of an occupant's seat and a vehicle body frame.
FIG. 3 is views showing a structure of a seatbelt.
FIG. 4 is views showing a structure of a step.
FIG. 5 is views illustrating operation of the step.
FIG. 6 is views showing a structure of a step load detection mechanism.
FIG. 7 is views illustrating operation after release of the occupant's seat till landing.
FIG. 8 is a flow chart until a seat lock is released.
FIG. 9 is a view showing a modified form of that of FIG. 2.
FIG. 10 is views illustrating operation of sliding expansion of an impact absorbing member.
FIG. 11 is a flow chart until the impact absorbing member is expanded.
FIG. 12 is a view showing another modified form of that of FIG. 2.
FIG. 13 is views illustrating operation of rotational expansion of the impact absorbing member.
FIG. 14 is a view showing a further modified form of that of FIG. 2.
FIG. 15 is views illustrating operation of an airbag upon inflation expansion.
FIG. 16 is an exploded view of another occupant restraining apparatus and the vehicle body frame.
FIG. 17 is views showing a structure of a pawl member.
FIG. 18 is views illustrating operation of another occupant's seat and the pawl member.
FIG. 19 is views showing a modified form of that of FIG. 18.
FIG. 20 is views showing another modified form of that of FIG. 18.
FIG. 21 is a view showing a configuration of another releasing mechanism.
FIG. 22 is views illustrating operation after an occupant's seat including a different releasing mechanism is released till landing.

Embodiments of the present invention are described below with reference to the accompanying drawings. It is to be noted that the drawings should be viewed in the direction of reference symbols. Further, the front and rear and the left and right are defined with reference to a driver seated on a seat.

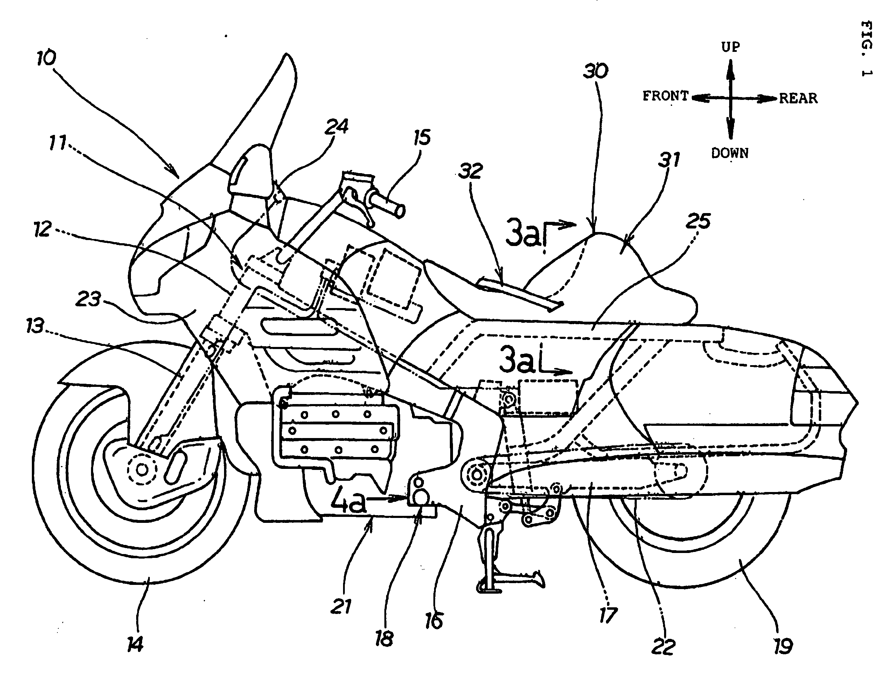

An embodiment 1 of the present invention is described with reference to the drawings.
As shown in FIG. 1, a motorcycle 10 is a vehicle which includes a front fork 13 provided for steering operation on a head pipe 12 of a vehicle body frame 11, a front wheel 14 provided for rotation at a lower end of the front fork 13, a steering handle bar 15 provided at an upper end of the front fork 13, a swing arm 17 provided for upward and downward rocking motion on a pivot plate 16 extending downwardly from a rear portion of the vehicle body frame 11, a step 18 (details are hereinafter described) provided on the pivot plate 16, a rear wheel 19 provided for rotation at a rear end of the swing arm 17, an engine 21 disposed below the vehicle body frame 11 such that the rear wheel 19 is driven by the engine 21 through a chain 22, a meter panel 24 provided at an upper portion of a front cowl 23 which covers the head pipe 12, a seat rail 25 extending rearwardly from the upper side of a rear portion of the vehicle body frame 11, and an occupant restraining apparatus 30 provided on the seat rail 25 which can be released from the vehicle body frame 11 upon falling down of the vehicle.

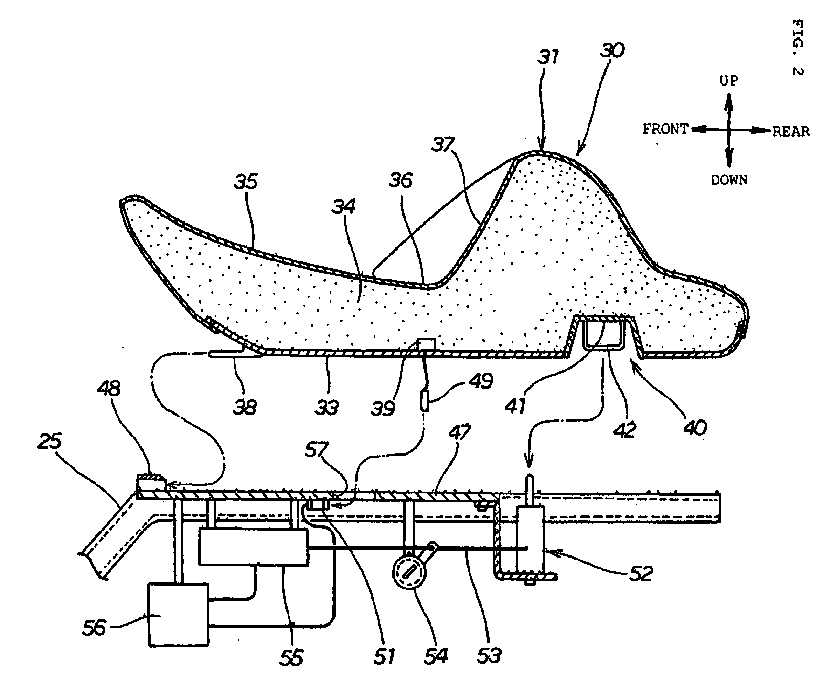

This occupant restraining apparatus 30 includes an occupant's seat 31 (details are hereinafter described) for being seated by an occupant, and a seatbelt 32 (details are hereinafter described) provided on the occupant's seat 31 for fixing an occupant. The mounting structure of the occupant's seat 31 and the vehicle body frame 11 will be described with reference to FIG. 2.

As shown in FIG. 2, the occupant's seat 31 includes a bottom plate 33, a cushion 34 placed on the bottom plate 33, and a skin 35 attached to the bottom plate 33 so as to cover the cushion 34. Further, a seating portion 36 for being seated by an occupant and a waist receiving portion 37 with which the waist part of the occupant contacts are formed on an upper face of the occupant's seat 31.

Further, a hook 38 extending forwardly is provided at a front end portion of the bottom plate 33, and a seat load detection section 39 for detecting the load of an occupant seated on the seating portion 36 is attached to an intermediate portion of the bottom plate 33. Further, a releasing mechanism 40 (details are hereinafter described) which allows release thereof from the right seat rail 25 together with an occupant upon falling down of the motorcycle (reference numeral 10 of FIG. 1) is provided at a rear portion of the bottom plate 33.

This releasing mechanism 40 is formed from a recessed portion 41 which is recessed upwardly from the bottom plate 33, and a lock pin 42 extending downwardly from the recessed portion 41 such that a lower end thereof is disposed above the bottom plate 33 and removably attached to a seat lock section hereinafter described.

Meanwhile, a seat support member 47 on which the bottom plate 33 of the occupant's seat 31 is placed is provided on the right seat rail 25. A set stay 48 into which the hook 38 of the occupant's seat 31 is inserted is provided at a front end portion of the seat support member 47, and a female terminal 51 for fitting with a male terminal 49 extending from the seat load detection section 39 is attached to an intermediate portion of the seat support member 47. Further, a well-known seat lock section 52 to which the lock pin 42 of the releasing mechanism 40 is removably connected is provided at a rear end portion of the seat support member 47.

Meanwhile, the seat support member 47 has provided thereon a cylinder lock 54 and an actuator 55 which are connected to the seat lock section 52 through a wire 53 and a control section 56 which receives a signal of the seat load detection section 39 and issues an operation instruction to the actuator 55 through the male terminal 49 and the female terminal 51.

In particular, the occupant's seat 31 and the right seat rail 25 are assembled by inserting the hook 38 into the set stay 48, threading the male terminal 49 through an opening 57 of the seat support member 47 until it is fitted into the female terminal 51 and connecting the lock pin 42 to the seat lock section 52.

When the vehicle falls down during traveling, a signal is transmitted from a bank angle detection section (details are hereinafter described) to the control section 56, and the control section 56 issues an operation instruction to the actuator 55. When the actuator 55 pulls the wire 53 to the front side, since the cylinder lock 54 is rotated to the front side simultaneously, the locking of the releasing mechanism 40 by the seat lock section 52 is canceled. It is to be noted that, also if the cylinder lock 54 is manually rotated while the vehicle stops, the locking of the releasing mechanism 40 by the seat lock section 52 is canceled.

Also, the male terminal 49 and the female terminal 51 are terminals of a structure by which the occupant's seat 31 comes off simply when it is released from the seat support member 47. Now, a structure of the occupant's seat and the seatbelt is described.

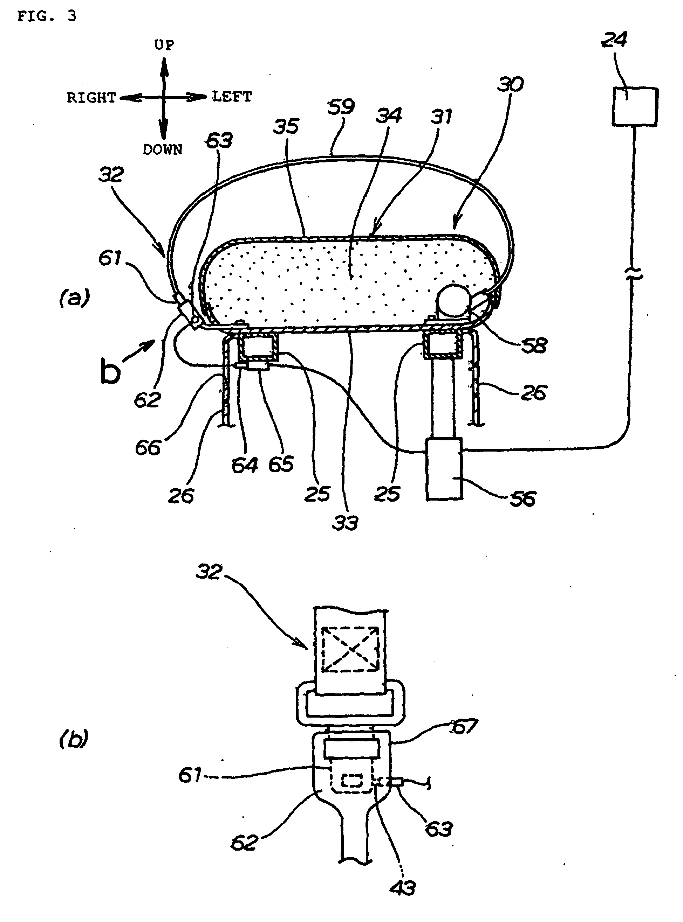

Referring to FIG. 3, as shown in (a), the seatbelt 32 includes a takeup mechanism 58 provided in the inside of the left side of the occupant's seat 31, a waist webbing 59 extending from the takeup mechanism 58 to the right side of the occupant's seat 31 past above the occupant's seat 31, a tongue 61 provided at an end of the waist webbing 59, and a buckle 62 to which the tongue 61 is removably connected and which is attached to the right side of the occupant's seat 31.

A seatbelt detection section 63 of the contact type is attached to a side face of the buckle 62. If the buckle 62 is mounted fully on the tongue 61, then the tongue 61 pushes a detection piece of the seatbelt detection section 63, and consequently, the connection state of the tongue 61 and the buckle 62 can be detected by the seatbelt detection section 63.

It is to be noted that, if the mounting of the tongue 61 on the buckle 62 is not full, then the seatbelt detection section 63 detects the unconnected state of the tongue 61 and the buckle 62.

The seatbelt detection section 63 is connected to a female terminal 65 attached to the right seat rail 25 through a male terminal 64. The male terminal 64 is a terminal of a structure by which it can come off simply from the female terminal 65 when the occupant's seat 31 is released from the seat rails 25, 25 when the motorcycle (reference numeral 10 of FIG. 1) falls down.

In addition, the female terminal 65 is connected to the control section 56, and this control section 56 is connected to the meter panel 24. If the seatbelt detection section 63 detects the unconnected state of the tongue 61 and the buckle 62, then the seatbelt detection section 63 sends a signal to the control section 56, and the control section 56 sends a signal to the meter panel 24. Accordingly, a warning that the seatbelt is not worn is displayed on the meter panel 24.

In particular, as shown in (b), the tongue 61 provided on the seatbelt 32 is removably connected to the buckle 62 provided on the occupant's seat 31, and the seatbelt detection section 63 of the contact type is provided on a side face 67 of the buckle 62. When this seatbelt detection section 63 detects that the occupant does not wear the seatbelt as yet, it sends a signal to the meter panel 24 provided on the vehicle body, and the meter panel 24 displays a warning to wear the seatbelt to the occupant.

By the display of the warning to wear the seatbelt, it is possible to urge the occupant to wear the seatbelt with certainty. Reference numeral 43 denotes a detection piece of the seatbelt detection section, and the seatbelt detection section 63 exhibits an ON state when the detection piece 43 is pushed by the tongue 61. Now, a structure of the step is described.

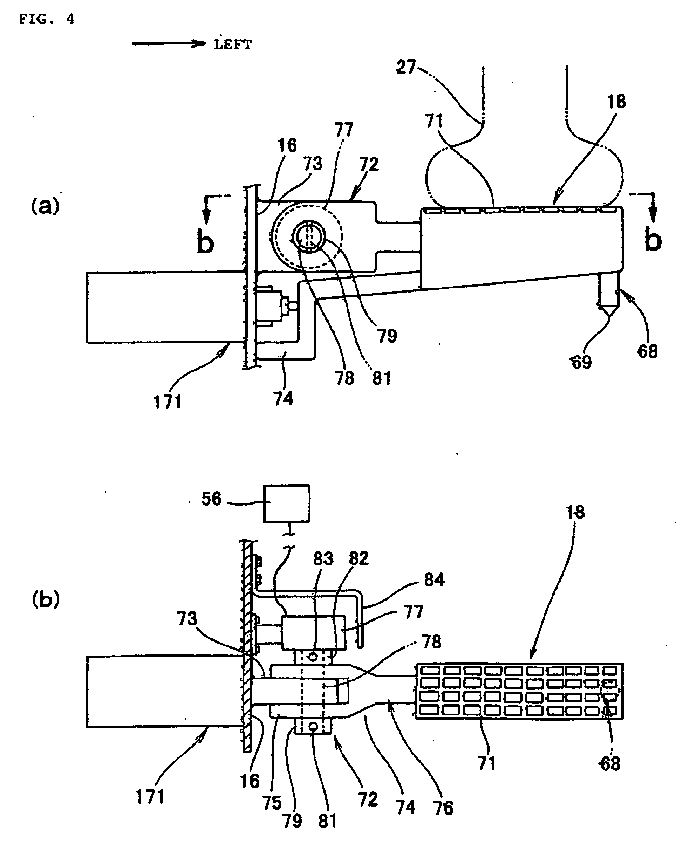

Referring to FIG. 4, as shown in (a), the left foot 27 of an occupant is placed on the left step 18. The left step 18 includes a support member 73 provided on the pivot plate 16, a rotatable portion 72 (details are hereinafter described) attached for rotation on the support member 73, a foot receiving portion 71 attached to the rotatable portion 72 for receiving the left foot 27 of the occupant placed thereon, a left bank angle detection member 68 extending downwardly from the foot receiving portion 71 and having a contact end 69 for contacting with the ground surface, and a stopper 74 extending from the foot receiving portion 71 so as to contact with the pivot plate 16 for stopping rotation of the left step 18.

In addition, a step load detection mechanism 171 (details are hereinafter described) for detecting the step load is attached to the pivot plate 16.

As shown in (b), the rotatable portion 72 includes a connection member 76 having a fork portion 75 which sandwiches the support member 73, extending to the left side, having the foot receiving portion 71 attached thereto and including a connecting portion 79, a shaft 78 fitted in the connection member 76, the support member 73 and a left bank angle detection section 77 (details are hereinafter described) attached to the pivot plate 16, a pin 81 for connecting the shaft 78 and the connecting portion 79 to each other, and a pin 83 for connecting the shaft 78 and a connecting portion 82 of the left bank angle detection section 77. It is to be noted that the left bank angle detection section 77 is covered with a cover 84.

The left bank angle detection section 77 detects a bank angle when the motorcycle (reference numeral 10 of FIG. 1) falls down to the left side until the contact end 69 of the left bank angle detection member 68 hits on the ground surface. The bank angle detected by the left bank angle detection section 77 is transmitted to the control section 56. Now, operation of the left step 18 is described.

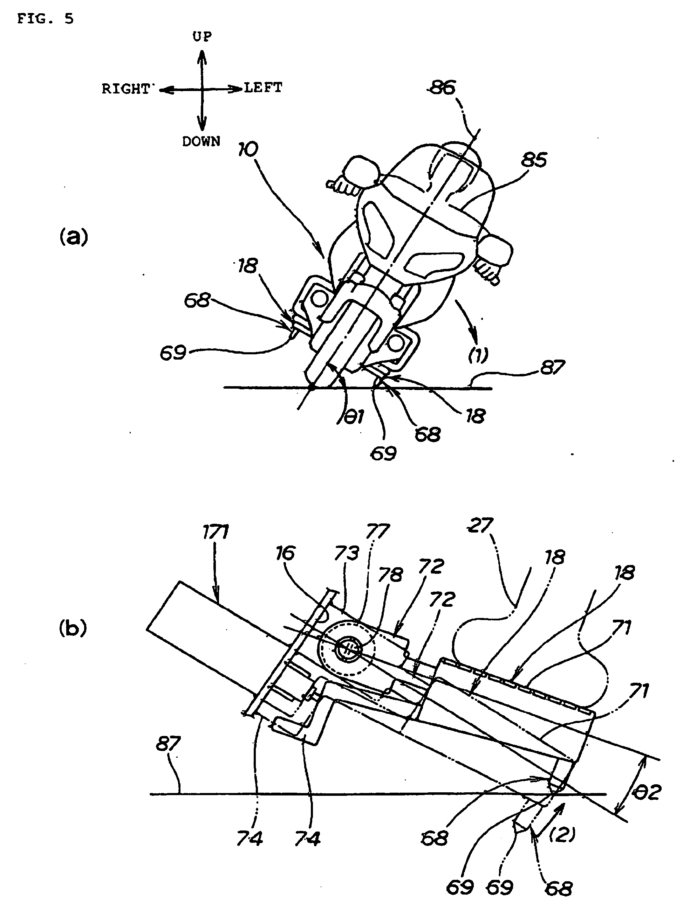

Referring to FIG. 5, as shown in (a), the motorcycle 10 is driven in a state wherein it keeps a bank angle θ1, and the contact end 69 of the left bank angle detection member 68 contacts with the ground surface 87. The bank angle 61 is an angle defined by a vehicle center line 86 of the motorcycle 10 and the ground surface 87.

If the motorcycle 10 is further inclined as indicated by an arrow mark (1), then the contact end 69 of the left bank angle detection member 68 moves as indicated by an arrow mark (2) from the position of an imaginary line as shown in (b). If the rotational angle of the left step 18 at this time is represented by θ2, then the rotational angle θ2 indicates an angular variation of the left step 18 after the contact end 69 of the left bank angle detection member 68 is brought into contact with the ground surface 87. Further, the rotational angle θ2 is detected by the left bank angle detection section 77.

In particular, in the motorcycle 10, the rotational angle 62 is set, and if an angle exceeding the rotational angle θ2 is detected by the left bank angle detection section 77, then it is decided by the control section (reference numeral 56 of FIG. 4) that the rotational angle reaches an angle at which the motorcycle 10 can fall down. Now, a structure of the step load detection mechanism 171 is described.

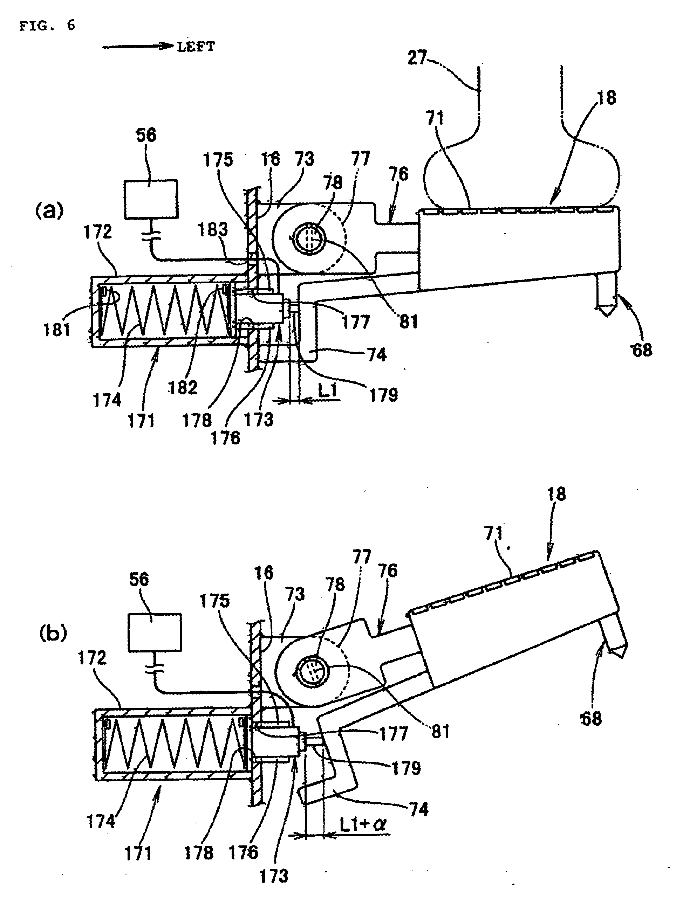

Referring to FIG. 6, as shown in (a), the step load detection mechanism 171 includes a case 172 attached to the pivot plate 16, a step load detection section 173 (details are hereinafter described) attached for movement in the vehicle widthwise direction (leftward and rightward direction in the figure) to the pivot plate 16, and a compression spring 174 provided between the step load detection section 173 and the inner face of the case 172 for exerting a pushing out action to the step load detection section 173.

The step load detection section 173 includes a guide rail 175 provided on the upper side and another guide rail 176 provided on the lower side. The guide rail 175 is fitted in a guide slot 177 of the pivot plate 16, and the guide rail 176 is fitted in a guide slot 178 of the pivot plate 16. Consequently, the step load detection section 173 can move in the vehicle widthwise direction.

Since the left foot 27 of the occupant is placed on the left step 18, a detection piece 179 of the step load detection section 173 is pushed by the stopper 74 and the step load detection section 173 compresses the compression spring 174. The projecting length of the detection piece 179 at this time is L1, and the step load detection section 173 is in an ON state. Further, since the step load detection section 173 is connected to the control section 56, an ON signal of the step load detection section 173 can be sent to the control section 56.

If the left foot 27 is moved fully away from the foot receiving portion 71, then the compression spring 174 pushes the stopper 74 leftwardly through the step load detection section 173, the foot receiving portion 71, left bank angle detection member 68, connection member 76 and shaft 78 are rotated in the counterclockwise direction as illustrated in (b). The projecting length of the detection piece 179 at this time is L1 + α, and the step load detection section 173 is placed into an OFF state.

In particular, in the motorcycle (reference numeral 10 in FIG. 1), for example, when the vehicle begins to fall down, it can be detected as an OFF state of the step load detection section 173 that the left foot 27 of the occupant is spaced away from the left step 18. Since an OFF signal of the step load detection section 173 is sent to the control section 56, the control section 56 decides that the inclination angle of the motorcycle 10 reaches an angle at which the motorcycle 10 can fall down.
Operation of the occupant restraining apparatus 30 described above is described below.

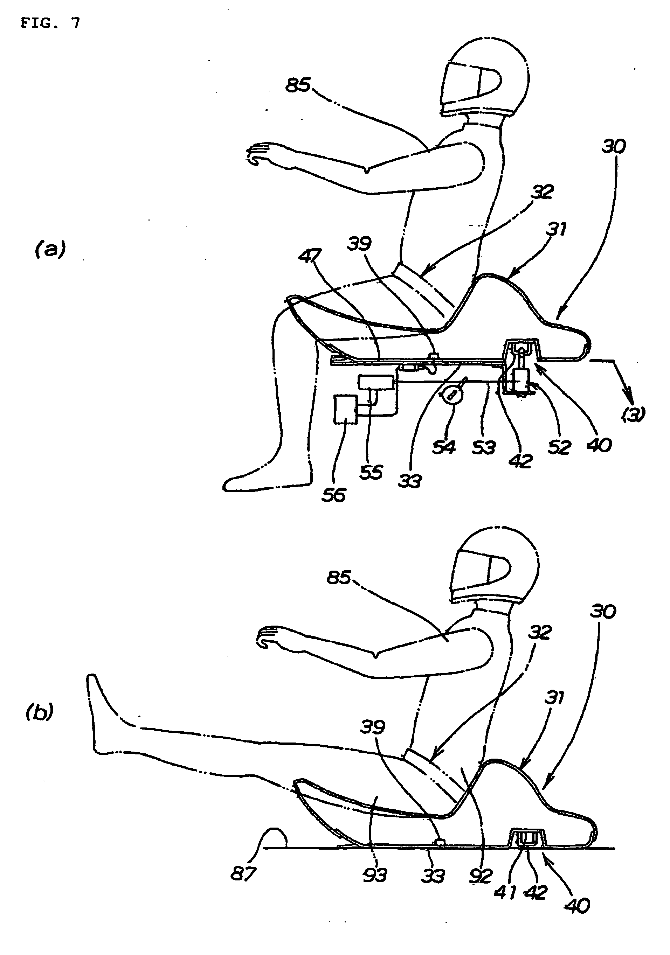

Referring to FIG. 7, when the motorcycle (reference numeral 10 of FIG. 1) falls down to the left side, since the actuator 55 operates in accordance with an instruction of the control section 56 to pull the wire 53 to the front side as seen in (a), the seat lock section 52 cancels the connection to the releasing mechanism 40. Consequently, the occupant's seat 31 is released to the left side as indicated by an arrow mark (3) from the seat support member 47 while the occupant 85 remains seated on the occupant's seat 31.

Referring to (b), since the occupant 85 lands on the ground surface 87 while it remains seated on the occupant's seat 31, the waist part 92 and the thigh parts 93 of the occupant 85 are covered with the occupant's seat 31.

Since the occupant's seat 31 includes the releasing mechanism 40 which allows release thereof from the seat support member 47 together with the occupant 85 when the vehicle falls down, the occupant's seat 31 can be released smoothly from the seat support member 47 when the vehicles falls down. Accordingly, the occupant restraining apparatus 30 for a motorcycle which allows the occupant 85 to be released smoothly from the seat support member 47 (vehicle body) when the motorcycle falls down can be provided.

Further, since the occupant's seat 31 is released while the occupant 85 remains seated thereon, when the occupant's seat 31 is landed on the ground surface 87, it can be expected to interpose the occupant's seat 31 between the occupant 85 and the ground surface 87. Now, a flow until the seat lock is canceled when the motorcycle falls down is described.

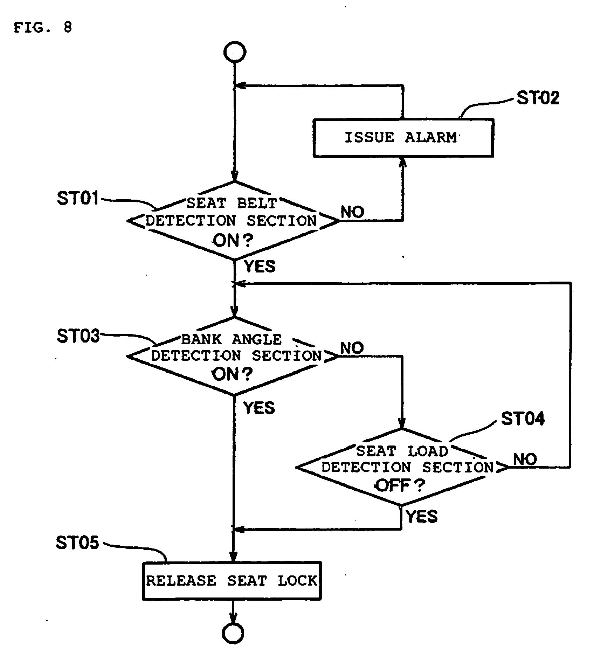

As shown in FIG. 8, at step number (hereinafter referred to as step ST) 01, it is confirmed whether or not the seat belt detection section is ON, and if the result of the confirmation is YES, then the processing advances to step ST03, but if the result of the confirmation is NO, then the processing advances to step ST02. In particular, it is confirmed by the seatbelt detection section 63 of the contact type whether or not the tongue 61 is fully mounted on the buckle 62 as seen in FIG. 3(b).

At step ST02, an alarm is issued. In particular, a seatbelt wearing warning to the occupant is displayed on the meter panel 24 as shown in FIG. 3(a).

It is confirmed at step ST03 whether or not the bank angle detection section is ON, and if the confirmation is YES, then the processing advances to step ST05, but if the confirmation is NO, then the processing advances to step ST04. In particular, the rotational angle of the left step 18 is detected by the left bank angle detection section 77 as illustrated in FIG. 5(b).

It is confirmed at step ST04 whether or not the seat load detection section is OFF, and if the confirmation is YES, then the processing advances to step ST05, but if the confirmation is NO, then the processing returns to step ST03. At step ST04, the seat load detection section (reference numeral 39 of FIG. 2) detects the OFF state such that it is decided by the seat load detection that the occupant has moved in a direction away from the vehicle even if it is detected that the bank angle does not reach a predetermined angle at which falling down is decided.

At step ST05, the seat lock is canceled. In particular, the seat lock section 52 cancels the connection to the releasing mechanism 40 by operation of the actuator 55 as illustrated in FIG. 7(a).

It is to be noted that the confirmation carried out at step ST04 regarding whether or not the seat load detection section is OFF may be replaced by a confirmation of whether or not the step load detection section (reference numeral 173 of FIG. 6) is OFF.

Referring to FIG. 7(a), the releasing mechanism 40 is released from the seat support member 47 in response to the falling down detection of the vehicle, and the falling down detection detects at least one of the inclination of the vehicle load, the seat load and the step load to decide the inclination of the vehicle body and the state of the occupant 85 by means of the control section 56 provided on the vehicle body. The inclination angle of the vehicle body is detected by the bank angle detection section (reference numeral 77 of FIG. 4), and the seat load is detected by the seat load detection section 39 while the step load is detected by the step load detection section (reference numeral 173 of FIG. 6).

Since the control section 56 decides the inclination of the vehicle body and the state of the occupant 85, the falling down detection of the vehicle can be carried out with reliability. By carrying out the reliable falling down detection, when the vehicle falls down, the occupant's seat 31 can be released with certainty from the seat support member 47.

The occupant's seat described above lands, after it is released from the vehicle body, on the ground surface and covers the waist part and the thigh parts of the occupant. It is more desirable if the occupant's seat can cover the back part in addition to the waist part and the thigh parts of the occupant. An occupant's seat which can cover also the back part of the occupant is described in connection with the following embodiment 2.

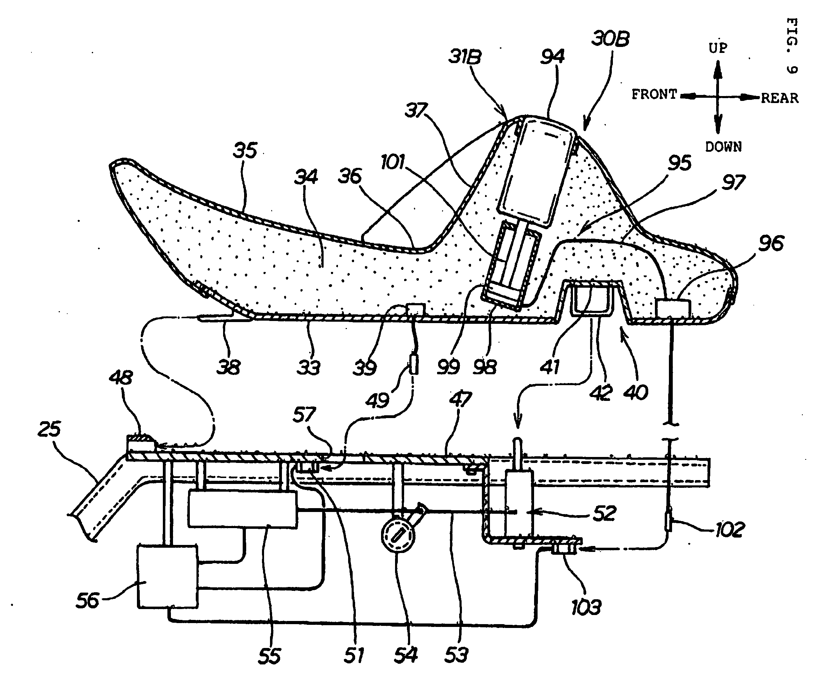

Now, the embodiment 2 of the present invention is described with reference to the drawings.
Referring to FIG. 9, description of a common structure to that of FIG. 2 is omitted using like reference symbols. An occupant's seat 31B has an impact absorbing member 94 built in a rear portion thereof, and this impact absorbing member 94 slidably expands when the occupant's seat 31B is released from the seat support member 47 connected to the right seat rail 25. Now, an expansion apparatus for the impact absorbing member 94 is described.

The expansion apparatus 95 includes an inflator 96 provided on the bottom plate 33 for generating gas instantaneously so as to play a role as an expansion power source for the impact absorbing member 94, a cylinder 98 connected to the inflator 96 through a pipe 97 and extending in the downward direction, a piston 99 built in the cylinder 98, and a piston rod 101 extending from the piston 99 and having an impact absorbing member 94 provided at an end thereof.

A female terminal 103 with which a male terminal 102 of the inflator 96 is fitted is attached to the seat support member 47, and this female terminal 103 is connected to the control section 56. The female terminal 103 and the male terminal 102 are terminals of a structure by which they come off simply when the occupant's seat 31B is released from the seat support member 47.

If an instruction is issued from the control section 56 to the inflator 96 through the female terminal 103 and the male terminal 102 when the vehicle falls down, then the inflator 96 generates gas instantaneously. This gas flows into a lower chamber in the cylinder 98 through the pipe 97 so that the piston 99 and the piston rod 101 are pushed out upwardly and the impact absorbing member 94 is pushed out outwardly of the occupant's seat 31B. Now, operation of sliding expansion of the impact absorbing member is described.

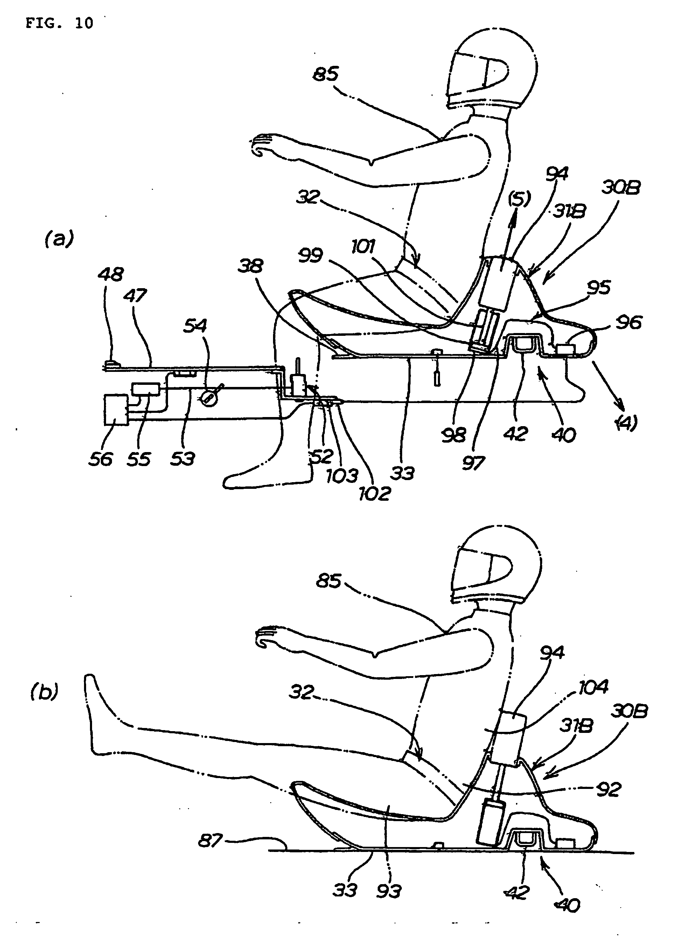

Referring to FIG. 10, as shown in (a), the occupant's seat 31B is released from the seat support member 47 while the occupant 85 remains seated thereon when the vehicle falls down and moves to the left side as indicated by an arrow mark (4). At this time, if an expansion instruction is issued from the control section 56 to the inflator 96, then the impact absorbing member 94 slidably expands upwardly as indicated by an arrow mark (5).

In (b), since the occupant 85 lands on the ground surface 87 while it remains seated on the occupant's seat 31B, the waist part 92 and the thigh parts 93 of the occupant 85 are covered. Also the back part 104 of the occupant 85 is covered with the impact absorbing member 94.

In the occupant restraining apparatus 30B, when the occupant's seat 31B is released from the seat support member 47, since the impact absorbing member 94 built in a rear portion of the occupant's seat 31B slidably expands, the occupant 85 can be covered with the occupant's seat 31B and the impact absorbing member 94. In particular, the occupant's seat 31B can be interposed between the occupant 85 and the ground surface 87 and so forth and also the impact absorbing member 94 can be interposed. Now, a flow until the impact absorbing member is expanded when the motorcycle falls down is described.

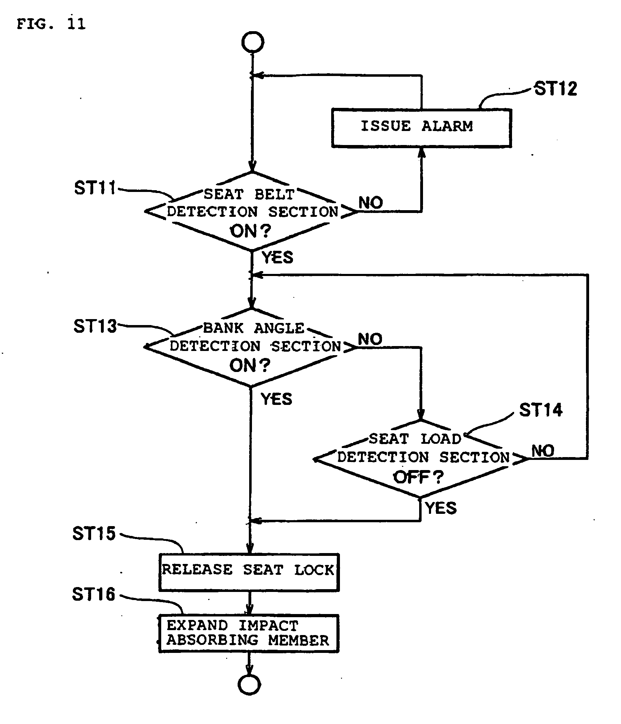

As illustrated in FIG. 11, at step ST11, it is confirmed whether or not the seatbelt detection section is ON, and if the result of the confirmation is YES, then the processing advances to step ST13, but if the result of the confirmation is NO, then the processing advances to step ST12. In particular, it is confirmed by the seatbelt detection section 63 of the contact type whether or not the tongue 61 is mounted fully on the buckle 62 as shown in FIG. 3(b).

At step ST12, an alarm is issued. In particular, a seatbelt wearing warning to the occupant is displayed on the meter panel 24 as shown in FIG. 3(a).

At step ST13, it is confirmed whether or not the bank angle detection section is ON, and if the confirmation is YES, then the processing advances to step ST15, but if the confirmation is NO, then the processing advances to step ST14. In particular, the rotational angle of the left step 18 is detected by the left bank angle detection section 77 as illustrated in FIG. 5(b).

At step ST14, it is confirmed whether or not the seat load detection section is OFF, and if the confirmation is YES, then the processing advances to step ST15, but if the confirmation is NO, then the processing returns to step ST13. At step ST14, the seat load detection section (reference numeral 39 of FIG. 2) detects the OFF state such that it is decided by the seat load detection that the occupant has moved in a direction away from the vehicle even if it is detected that the bank angle does not reach a predetermined angle at which falling down is decided.

At step ST15, the seat lock is released. In particular, the seat lock section 52 cancels the connection to the releasing mechanism 40 by operation of the actuator 55 as illustrated in FIG. 7(a).

At step ST16, the impact absorbing member is expanded. In particular, an expansion instruction is issued from the control section 56 to the inflator 96 to slidably expand the impact absorbing member 94 upwardly as indicated by an arrow mark (5) as shown in FIG. 10(a).

It is to be noted that the confirmation carried out at step ST14 regarding whether or not the seat load detection section is OFF may be replaced by a confirmation of whether or not the step load detection section (reference numeral 173 of FIG. 6) is OFF.

Incidentally, while the occupant's seat of the embodiment 2 is configured such that the impact absorbing member is slidably expanded after release from the vehicle body, the expansion method of the impact absorbing member may be different from the sliding method. An example wherein the impact absorbing member is rotationally expanded is described in connection with the next embodiment 3.

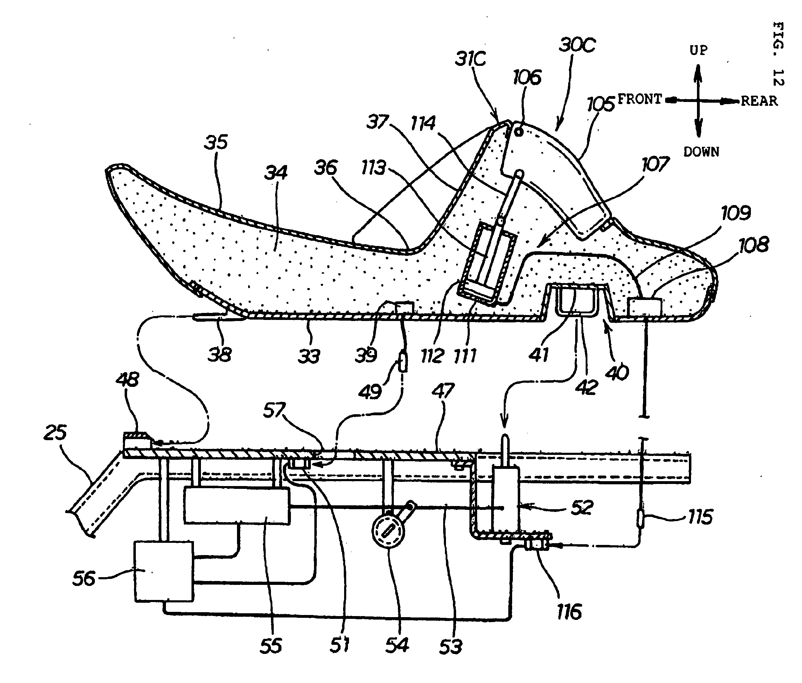

Now, the embodiment 3 of the present invention is described with reference to the drawings.
Referring to FIG. 12, description of a common structure to that of FIG. 2 is omitted using like reference symbols. A occupant's seat 31C has an impact absorbing member 105 built in a rear portion thereof, and the impact absorbing member 105 rotationally expands when the occupant's seat 31C is released from the seat support member 47. The impact absorbing member 105 is held for rotation on the occupant's seat 31C by a pin 106. Now, an expansion apparatus of the impact absorbing member 105 is described.

The expansion apparatus 107 includes an inflator 108 which is an expansion power source for the impact absorbing member 105, a pipe 109, a cylinder 111, a piston 112, a piston rod 113, and a link 114 for linking the piston rod 113 and the impact absorbing member 105 to each other.

A female terminal 116 with which a male terminal 115 of the inflator 108 is mated is attached to the seat support member 47, and the female terminal 116 is connected to the control section 56. The female terminal 116 and the male terminal 115 are terminals of a structure with which they come out simply when the occupant's seat 31C is released from the seat support member 47.

If an instruction is issued from the control section 56 to the inflator 108 when the vehicle falls down, then the inflator 108 generates gas instantaneously, and this gas flows into a lower chamber in the cylinder 111. Since the piston 112, piston rod 113 and link 114 are pushed upwardly by the gas, the impact absorbing member 105 rotates upwardly around the pin 106. Now, operation of the rotational expansion of the impact absorbing member is described.

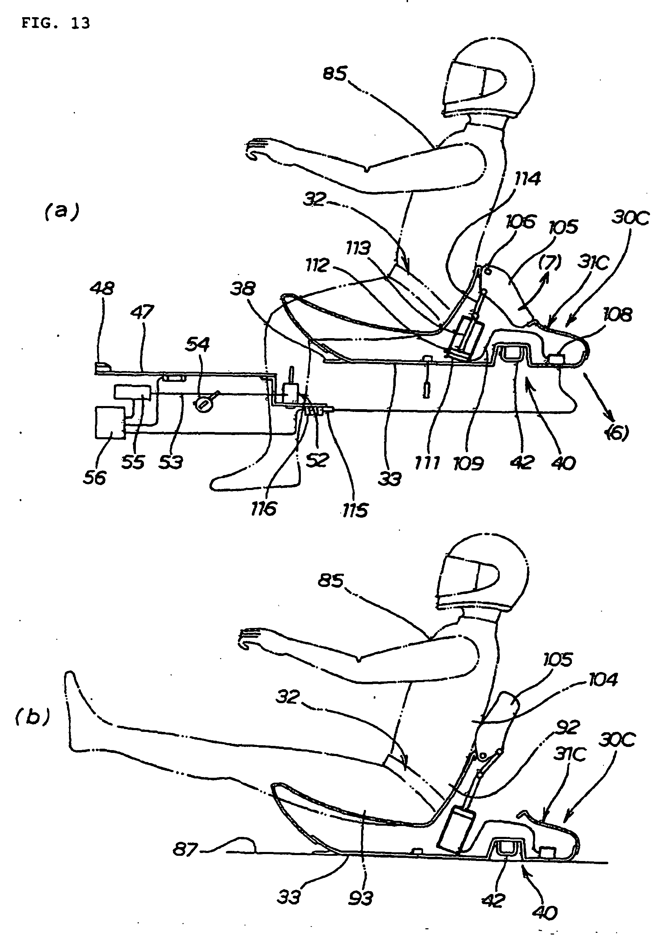

Referring to FIG. 13, the occupant's seat 31C is released from the seat support member 47 while the occupant 85 remains seated thereon when the vehicle falls down and moves to the left side as indicated by an arrow mark (6) as illustrated in (a). At this time, if an expansion instruction is issued from the control section 56 to the inflator 108, then the impact absorbing member 105 rotationally expands upwardly as indicated by an arrow mark (7).

In (b), since the occupant 85 lands on the ground surface 87 while it remains seated on the occupant's seat 31C, the waist part 92 and the thigh parts 93 of the occupant 85 are covered. Further, also the back part 104 of the occupant 85 is covered with the impact absorbing member 105.

In the occupant restraining apparatus 30C, when the occupant's seat 31C is released from the seat support member 47, the impact absorbing member 105 built in the rear portion of the occupant's seat 31 is rotationally expanded, and consequently, the occupant 85 can be covered with the occupant's seat 31C and the impact absorbing member 105. In other words, the occupant's seat 31C can be interposed between the occupant 85 and the ground surface 87 or the like and also the impact absorbing member 105 can be interposed.

While, in the embodiment 2 and the embodiment 3, the impact absorbing member is built in the occupant's seat, this impact absorbing member may be an airbag. An occupant's seat in which an airbag is built is described in connection with the following embodiment 4.

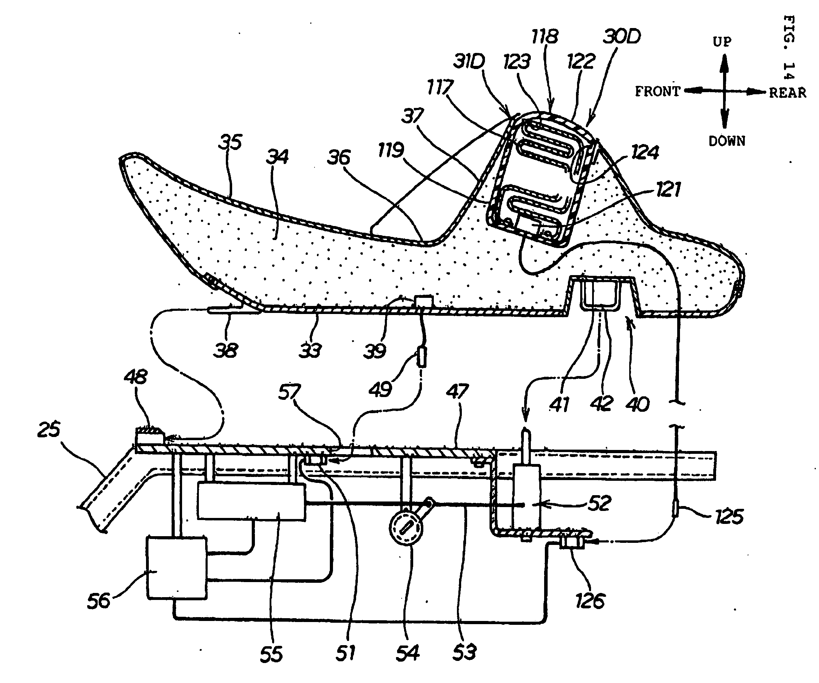

Now, the embodiment 4 of the present invention is described with reference to the drawings.
Referring to FIG. 14, description of a common structure to that of FIG. 2 is omitted using like reference symbols. An occupant's seat 31D includes an impact absorbing member provided at a rear portion thereof, and this impact absorbing member is an airbag 117. Now, a configuration of an airbag module which includes the folded airbag 117 is described.

The airbag module 118 includes an accommodation box 119 contacting with the cushion 34 in the inside of the occupant's seat 31D, an inflator 121 attached to a bottom portion of the accommodation box 119, an airbag 117 attached to the bottom portion of the accommodation box 119 in such a manner as to cover the inflator 121 and held in a folded state, and a lid 122 connected to the accommodation box 119 and covering the internal airbag 117.

A cutaway portion 123 which is broken when the airbag 117 is inflated and expanded is formed on the inner face of the front side of the lid 122. Further, on the inner face of the rear side of the lid 122, a connecting portion 124 is formed which plays a role of a hinge when the lid 122 is opened by the inflation expansion of the airbag 117.

A female terminal 126 with which a male terminal 125 of the inflator 121 is mated is attached to the seat support member 47, and the female terminal 126 is connected to the control section 56. The female terminal 126 and the male terminal 125 are terminals of a structure with which they come off simply when the occupant's seat 31D is released from the seat support member 47. Now, operation of the inflation expansion of the airbag is described.

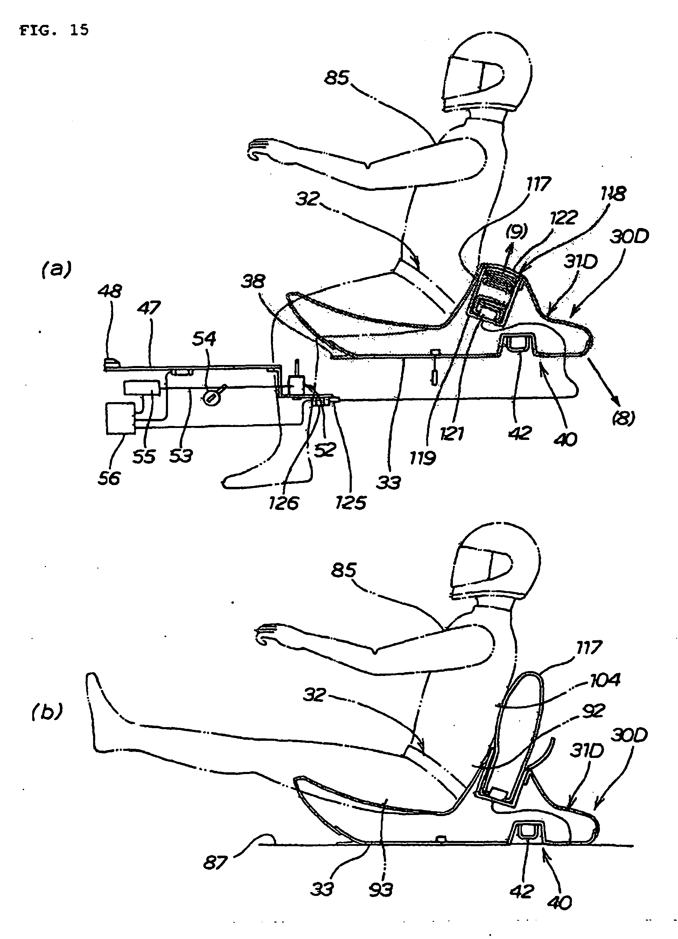

Referring to FIG. 15, as shown in (a), the occupant's seat 31D is released from the seat support member 47 while the occupant 85 remains seated thereon and moves to the left side as indicated by an arrow mark (8) when the vehicle falls down. At this time, if an expansion instruction is issued from the control section 56 to the inflator 121, then the airbag 117 inflates and expands upwardly as indicated by an arrow mark (9).

In (b), since the occupant 85 lands on the ground surface 87 while it remains seated on the occupant's seat 31D, the waist part 92 and the thigh parts 93 of the occupant 85 are covered. Further, also the back part 104 of the occupant 85 is covered with the airbag 117 in the inflated and expanded state. In particular, the occupant's seat 31D is interposed between the occupant 85 and the ground surface 87 or the like and the airbag 117 can be interposed.

While, in the description of the occupant restraining apparatus given above, the structure wherein the occupant's seat is released sidewardly from the vehicle body when the vehicle falls down, when the vehicle collides at the front face thereof, also there is the possibility that the occupant's seat may be released forwardly. An example which prevents the occupant's seat from being released forwardly when the vehicle collides at the front face thereof is described in connection with the following embodiment 5.

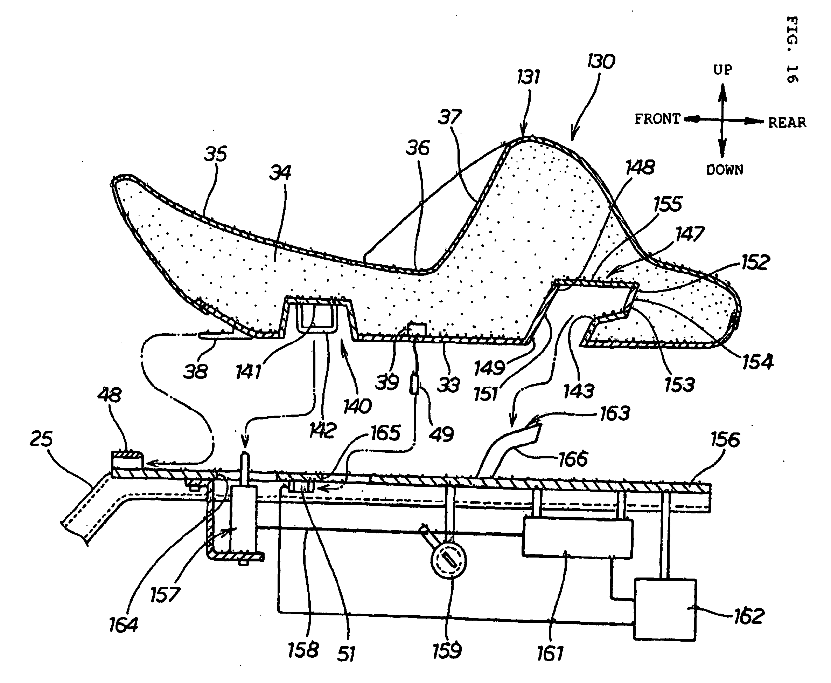

Now, the embodiment 5 of the present invention is described with reference to the drawings.
Referring to FIG. 16, description of a common structure to that of FIG. 2 is omitted using like reference symbols. An occupant's seat 131 includes a bottom plate 33, a cushion 34 and a skin 35, and includes a releasing mechanism 140 provided at a front portion of the bottom plate 33 which can be released from the right seat rail 25 together with the occupant when the motorcycle (reference numeral 10 of FIG. 1) falls down.

It is to be noted that, since the structure of the releasing mechanism 140 is similar to that of the releasing mechanism 40 (refer to FIG. 2), description thereof is omitted.

Further, an abutting portion 147 for being abutted with a pawl member hereinafter described when the motorcycle collides at the front face thereof is provided at a rear portion of the bottom plate 33. The abutting portion 147 includes an inclination member 151 provided on the front side and having a lower end 149 disposed on the front side with respect to an upper end 148 thereof, another inclination member 154 disposed on the rear side with respect to the inclination member 151 and having a lower end 153 disposed on the front side with respect to an upper end 152 thereof, an upper side member 155 which connects the inclination member 154 and the inclination member 151 to each other, and an abutting member 143 connected to the inclination member 154 and formed along the shape of the pawl member.

Meanwhile, a seat support member 156 on which the bottom plate 33 of the occupant's seat 131 is placed is provided on the right seat rail 25, and a well-known seat lock section 157 to which a lock pin 142 of the releasing mechanism 140 is removably connected is provided at a front portion of the seat support member 156.

Meanwhile, the seat support member 156 includes a cylinder lock 159 and an actuator 161 connected to the seat lock section 157 by a wire 158, and a control section 162 for receiving a signal of the seat load detection section 39 through the male terminal 49 and the female terminal 51 and issuing an operation instruction to the actuator 161.

In addition, a pawl member 163 (details are hereinafter described) with which the abutting portion 147 provided at a rear portion of the occupant's seat 131 is abutted is provided at a rear portion of the seat support member 156.

In particular, the occupant's seat 131 and the right seat rail 25 are assembled by inserting the hook 38 into the set stay 48, connecting the lock pin 142 to the seat lock section 157 through an opening 164 of the seat support member 156, fitting the male terminal 49 into the female terminal 51 through an opening 165 of the seat support member 156 and disposing the pawl member 163 in the inside of the abutting portion 147.

It is to be noted that the surface shape of the abutting member 143 of the abutting portion 147 and the shape of a receiving face 166 of the pawl member 163 are formed so as to coincide with each other. Now, a detailed structure of the pawl member 163 is described.

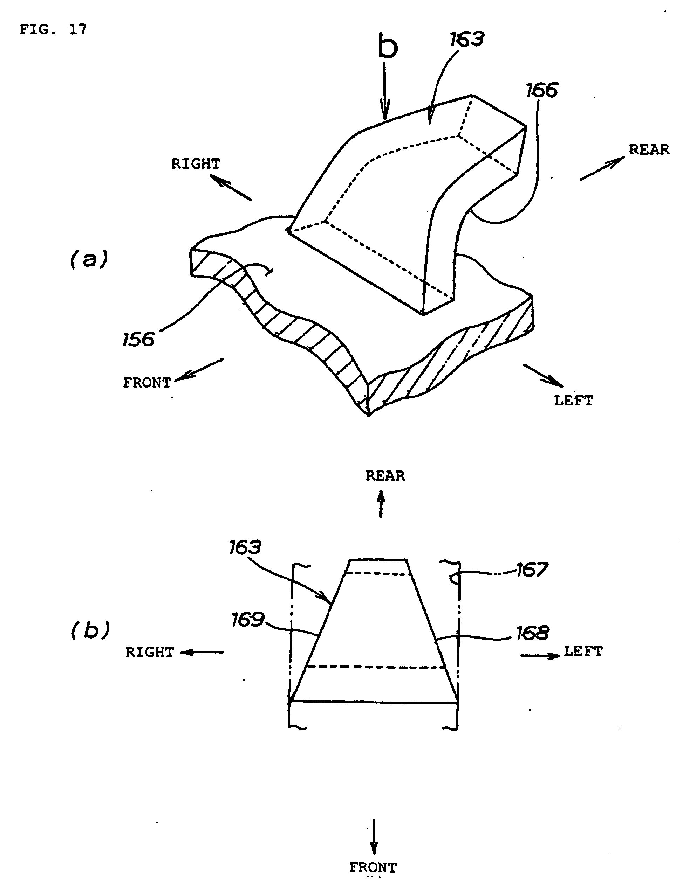

Referring to FIG. 17, as shown in (a), the pawl member 163 is formed so as to be bent rearwardly from the seat support member 156. Further, the pawl member 163 is formed such that the widthwise dimension thereof in the vehicle widthwise direction (leftward and rightward direction in the figure) decreases toward the rear.

As shown in (b), the pawl member 163 is formed in a trapezoidal shape as viewed in plan. If the inner face 167 of the abutting portion (reference numeral 147 of FIG. 16) of the occupant's seat (reference numeral 131 of FIG. 16) is indicated by a phantom line, then since a left side face 168 and a right side face 169 of the pawl member 163 do not contact with the inner face 167, the occupant's seat becomes liable to be released to the left or right in comparison with that in a case wherein they contact with the inner face 167. Now, operation of the occupant's seat released from the vehicle body when the motorcycle (reference numeral 10 of FIG. 1) collides at the front face thereof and the vehicle falls down sidewardly is described.

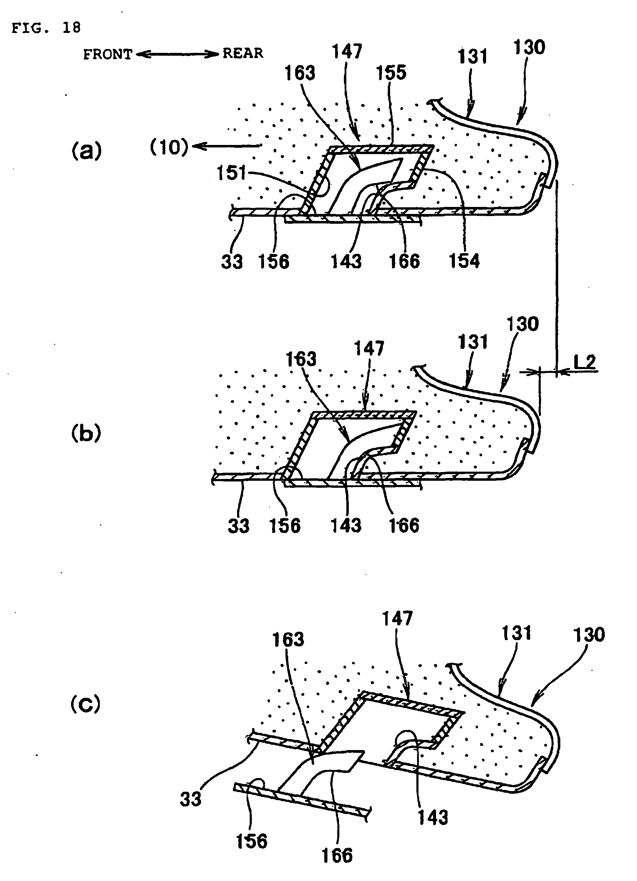

Description is given under the assumption that the seat lock is released in FIG. 18.
In (a), when the motorcycle (reference numeral 10 of FIG. 1) collides at the front face thereof, if the occupant's seat 131 moves forwardly as indicated by an arrow mark (10), then the abutting member 143 of the abutting portion 147 is brought into abutment with the receiving face 166 of the pawl member 163 as shown in (b).

On the bottom plate 33 of the occupant's seat 131, the abutting portion 147 which is abutted with the pawl member 163 on the seat support member 156 is provided on the bottom plate 33 of the occupant's seat 131. As the abutting member 143 of the abutting portion 147 is abutted with the receiving face 166 of the pawl member 163, forward release of the occupant's seat 131 can be stopped.

If the vehicle subsequently begins to fall down sidewardly, then the occupant's seat 131 rides on the pawl member 163 and begins to be released from the seat support member 156 as shown in (c).

It is to be noted that, while, in the embodiment 5, the releasing mechanism 140 is provided only at a front portion of the bottom plate 33 of the occupant's seat 131 as shown in FIG. 16, the releasing mechanism 140 may be provided at each of a front portion and a rear portion of the bottom plate 33.

While, in the embodiment 5, the abutting portion 147 and the pawl member 163 are used as means for stopping the occupant's seat 131 from being released forwardly, different restriction means is described in the following description of an embodiment 6.

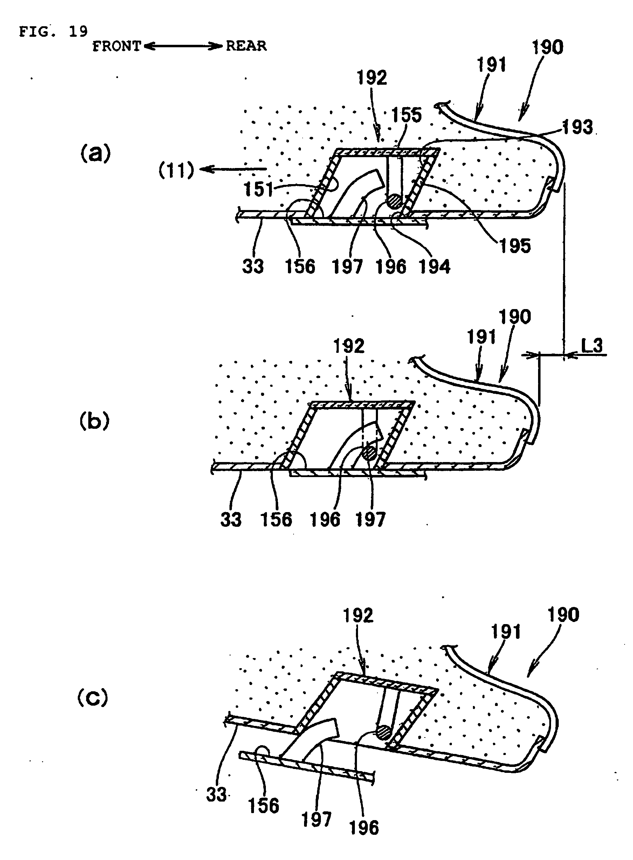

Now, the embodiment 6 of the present invention is described with reference to the drawings.
Referring to FIG. 19, description of a common structure to that of FIG. 18 is omitted using like reference symbols. As shown in (a), the occupant restraining apparatus 190 includes an abutting portion 192 provided at a rear portion of the bottom plate 33 of an occupant's seat 191.

The abutting portion 192 includes an inclination member 151, another inclination member 195 provided on the rear side with respect to the inclination member 151 and having a lower end 194 disposed on the front side with respect to an upper end 193 thereof, an upper side member 155, and a bar-like abutting member 196 extending downwardly from the upper side member 155 and further extending in the vehicle widthwise direction.

Meanwhile, a bar-like member 197 formed so as to be bent rearwardly for restricting forward movement of the abutting member 196 is provided on the seat support member 156.

When the motorcycle (reference numeral 10 of FIG. 1) collides at the front face thereof, if the seat lock is in a released state, then the occupant's seat 191 moves forwardly as indicated by an arrow mark (11). As a result, the abutting member 196 of the abutting portion 192 is brought into abutment with the bar-like member 197 on the seat support member 156 as shown in (b).

On the bottom plate 33 of the occupant's seat 191, the abutting member 196 for being abutted with the bar-like member 197 on the seat support member 156 is provided. As the abutting member 196 is abutted with the bar-like member 197, forward release of the occupant's seat 191 can be stopped.

Then, if the vehicle begins to fall down forwardly, then the occupant's seat 191 rides on the bar-like member 197 and begins to be released from the seat support member 156 as shown in (c).

While, in the embodiment 6, the abutting member 196 and the bar-like member 197 are used as means for stopping the occupant's seat 191 from being released forwardly, further restriction means is described in the following description of an embodiment 7.

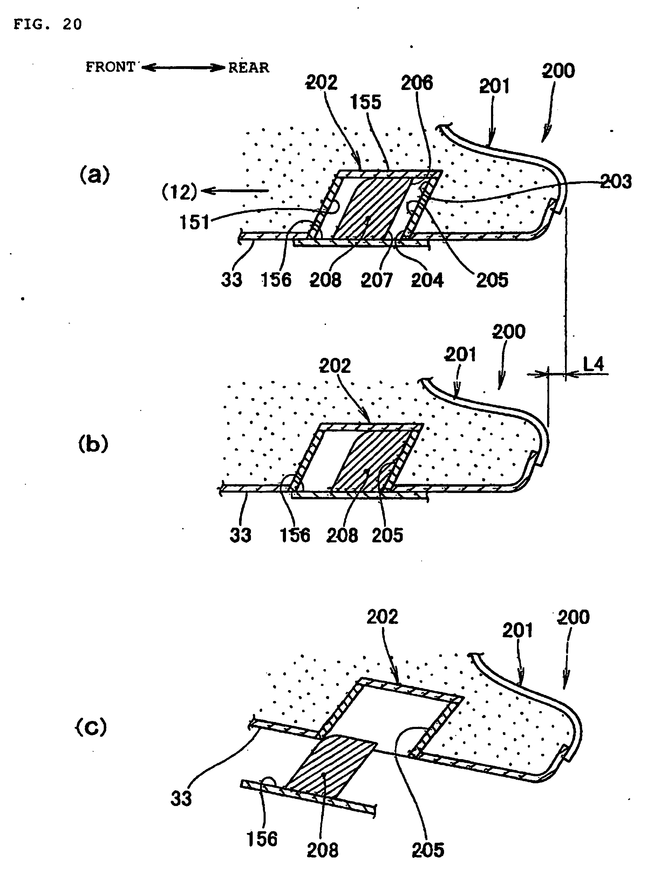

Now, the embodiment 7 of the present invention is described with reference to the drawings.
Referring to FIG. 20, description of a common structure to that of FIG. 18 is omitted using like reference symbols. As shown in (a), in an occupant restraining apparatus 200, an abutting portion 202 is provided at a rear portion of the bottom plate 33 of an occupant's seat 201.

The abutting portion 202 includes an inclination member 151, another inclination member 205 provided on the rear side with respect to the inclination member 151 and having a lower end 204 disposed on the front side with respect to an upper end 203 thereof, and an upper side member 155.

Meanwhile, on the seat support member 156, an inclination member 208 having a lower end 207 disposed on the front side with respect to an upper end 206 thereof is provided.

When the motorcycle (reference numeral 10 of FIG. 1) collides at the front face thereof, if the seat lock is in a released state, then the occupant's seat 201 moves forwardly as indicated by an arrow mark (12). As a result, the inclination member 205 of the abutting portion 202 is brought into abutment with the inclination member 208 on the seat support member 156 as shown in (b).

On the bottom plate 33 of the occupant's seat 201, the inclination member 205 for abutting with the inclination member 208 on the seat support member 156 is provided. As the inclination member 205 is brought into abutment with the inclination member 208, forward release of the occupant's seat 201 can be stopped.

Then, when the vehicle begins to fall down sidewardly, the occupant's seat 201 rides on the inclination member 208 and begins to be released from the seat support member 156 as shown in (c).

While, in the occupant's seats described above, the lock pin is disposed at a position higher than that of the bottom plate, the lock pin may be disposed lower than the bottom plate if landing of the occupant's seat is stabilized when the occupant is released from the vehicle body side together with the occupant's seat and lands. A particular example of this is described in the following description of an embodiment 8.

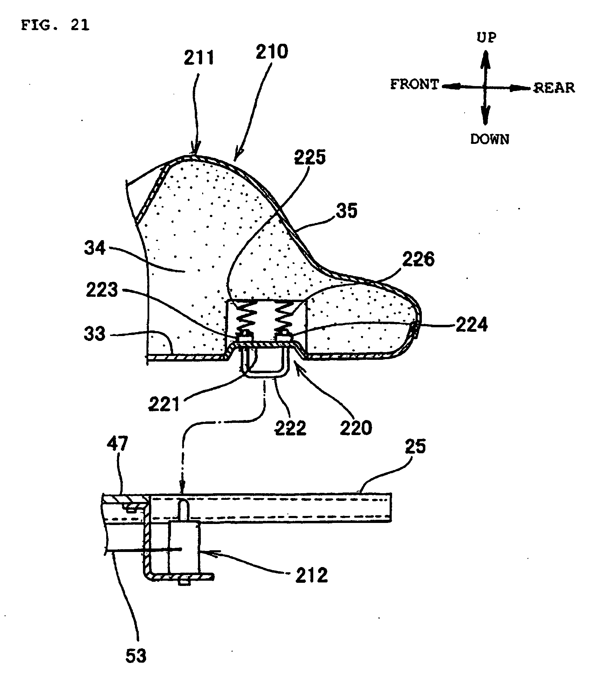

Now, the embodiment 8 of the present invention is described with reference to the drawings.
Referring to FIG. 21, description of a common structure to that of FIG. 2 is omitted using like reference symbols. An occupant's seat 211 includes a bottom plate 33, a cushion 34 and a skin 35, and further includes a releasing mechanism 220 (details are hereinafter described) provided at a rear portion of the bottom plate 33 such that it can be released from the right seat rail 25 together with the occupant when the motorcycle (reference numeral 10 of FIG. 1) falls down.

The releasing mechanism 220 includes a recessed portion 221 recessed upwardly from the bottom plate 33, a lock pin 222 provided for upward and downward movement in the recessed portion 221 and removably attached to a well-known seat lock section 212 provided on the seat support member 47, stoppers 223 and 224 attached to the opposite end portions of the lock pin 222, and compression springs 225 and 226 attached between the stoppers 223 and 224 and the cushion 34.

If upward force acts upon the lock pin 222, then since the lock pin 222 moves upwardly, the compression springs 225 and 226 are placed into a compressed state. In other words, when upward force acts upon the lock pin 222, the lock pin 222 does not project downwardly farther than the bottom plate 33. Now, operation of the occupant's seat 211 is described.

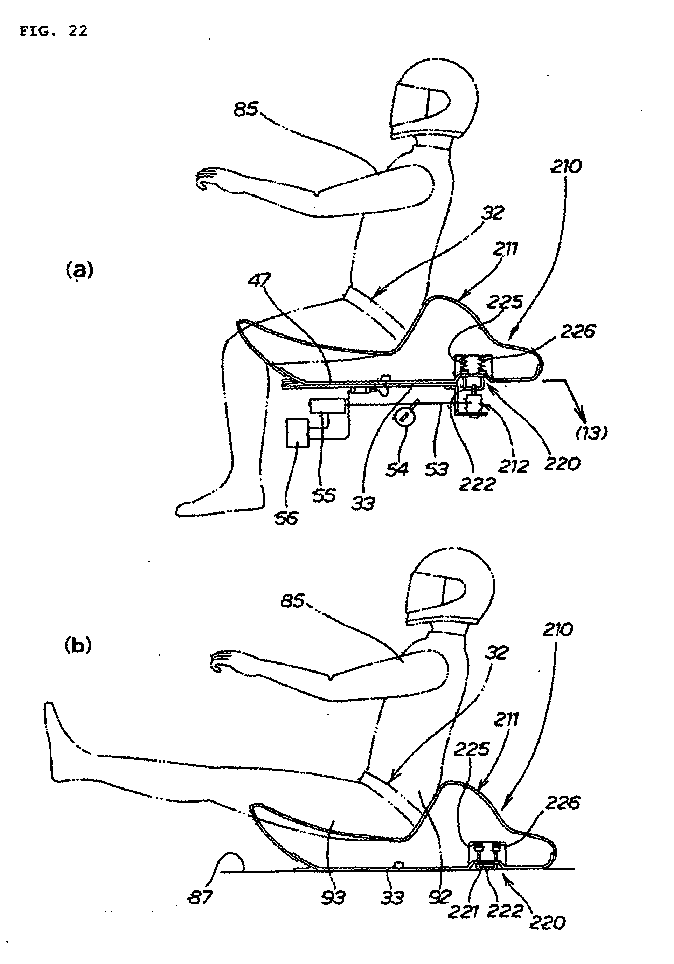

Referring to FIG. 22, description of a common structure to that of FIG. 7 is omitted using like reference symbols.
When the motorcycle (reference numeral 10 of FIG. 1) falls down to the left side, as shown in (a), if the actuator 55 operates in accordance with an instruction of the control section 56 to pull the wire 53 to the front side, then the seat lock section 212 cancels its connection to the releasing mechanism 220. Consequently, the occupant's seat 211 is released leftwardly sidewards as indicated by an arrow mark (13) from the seat support member 47 while the occupant 85 remains seated thereon.

In (b), since the occupant 85 lands on the ground surface 87 while it remains seated on the occupant's seat 211, the waist part 92 and the thigh parts 93 of the occupant 85 are covered with the occupant's seat 211. At this time, the lock pin 222 of the releasing mechanism 220 contacts with the ground surface 87 and compresses the compression springs 225 and 226. When the occupant's seat 211 lands on the ground surface 87, the lock pin 222 does not project downwardly farther than the bottom plate 33, unique occupant action after falling down can be prevented.

It is to be noted that, while, in the embodiments, the occupant restraining apparatus according to the present invention is applied to a motorcycle, it can be applied also to a three-wheeled vehicle and a four-wheeled vehicle such as a buggy and a jeep and may be applied to general vehicles.

In addition, while, in the embodiments, the expansion power source for the impact absorbing member in the present invention is formed applying an inflator, a structure wherein a compression spring is provided between the inner bottom face of the cylinder and the lower face of the piston may be applied instead. In the structure which uses a compression spring, before release of the occupant's seat, the compression spring is in a compressed state, and after release of the occupant's seat, since the stopper which has held the compression spring comes off, the piston moves upwardly by an expanding action of the compression spring. As a result, the impact absorbing member is expanded upwardly.

Further, while, in the embodiments, the seat load in the present invention is detected by the seat load detection section provided on the bottom plate of the occupant's seat, the seat load detection section may be provided on the seat supporting member (vehicle body side) so that it detects the seat load. Where the seat load detection section is provided on the seat supporting member (vehicle body side), the male terminal and the female terminal described in the description of the embodiments become unnecessary.

Further, while, in the embodiments, the seatbelt detection section in the present invention is formed applying that of the contact type, that of the non-contacting type may be applied.
Further, while, in the embodiments, the warning notification section in the present invention is formed applying a type wherein a warning is displayed on the meter panel, that of another type wherein warning sound is emitted may be adopted.

The occupant restraining apparatus of the present invention is suitable for a motorcycle.

### Description of Reference Symbols

10 ... Motorcycle, 11 ... Vehicle body frame (vehicle body), 24 ... Meter panel (warning notification section), 25 ... Seat rail (vehicle body), 30, 30B, 30C, 30D ... Occupant restraining apparatus, 31, 31B, 31C, 31D ... Occupant's seat, 32 ... Seatbelt, 39 ... Seat load detection section, 40 ... Releasing mechanism, 47 ... Seat support member (vehicle body), 56 ... Control section, 61 ... Tongue, 62 ... Buckle, 63 ... Seatbelt detection section, 68 ... Bank angle detection member, 77 ... Bank angle detection section, 85 ... Occupant, 94, 105 ... Impact absorbing member, 117 ... Airbag, 173 ... Step load detection section.

## Claims

1. An occupant restraining apparatus for a motorcycle (10) which includes an occupant's seat (31, 31B, 31C, 31D) provided on a vehicle body (11) and adapted to be seated by an occupant (85) and a seatbelt (32) provided on said occupant's seat (31, 31B, 31C, 31D) and adapted to fix the occupant (85), wherein
said occupant's seat (31, 31B, 31C, 31D) includes a releasing mechanism (40) which allows release thereof from the vehicle body (11) together with the occupant (85) when the vehicle falls down,
said occupant's seat (31, 31B, 31C, 31D) includes an impact absorbing member (94, 105) built in a rear portion thereof, **characterized in that**
said impact absorbing member (94, 105) expands when said occupant's seat (31, 31B, 31C, 31D) is released from the vehicle body (11), and
said occupant's seat includes restriction means (163, 197, 208) for stopping the occupant's seat from being released forwardly.

2. The occupant restraining apparatus for the motorcycle according to claim 1, **characterized in that** said impact absorbing member is an airbag (117).

3. The occupant restraining apparatus for the motorcycle according to any of claims 1 to 2, **characterized in that** said releasing mechanism (40) is released from the vehicle body (11) in response to detection of falling down of the vehicle, and the falling down detection detects at least one of an inclination angle of the vehicle body (11), a seat load and a step load to decide inclination of the vehicle body (11) and a state of the occupant (85) by means of a control section provided on the vehicle body (11).

4. The occupant restraining apparatus for the motorcycle according to any of claims 1 to 3, **characterized in that** a tongue (61) provided on said seatbelt (32) is removably connected to a buckle (62) provided on said occupant's seat (31, 31B, 31C, 31D) and a seatbelt detection section is provided on said buckle (62) such that, when said seatbelt detection section detects that the occupant (85) does not wear said seatbelt (32) as yet, said seatbelt detection section sends a signal to a warning notification section provided on the vehicle body (11) so that said warning notification section issues a seatbelt wearing warning to the occupant (85).

## Patentansprüche

1. Insassen-Rückhaltevorrichtung für ein Motorrad (10), die umfasst: einen Insassensitz (31, 31B, 31C, 31D), der auf einer Fahrzeugkarosserie (11) bereitgestellt ist und geeignet ist, von einem Insassen (85) besetzt zu werden, und einen Sitzgurt (32), der auf dem Insassensitz (31, 31B, 31C, 31D) bereitgestellt ist und geeignet ist, den Insassen (85) zu fixieren, wobei der Insassensitz (31, 31B, 31C, 31D) einen Lösemechanismus (40) umfasst, der sein Lösen von der Fahrzeugkarosserie (11) zusammen mit dem Insassen (85) erlaubt, wenn das Fahrzeug umfällt,
der Insassensitz (31, 31B, 31C, 31D) ein in seinen hinteren Abschnitt eingebautes aufpralldämpfendes Element (94, 105) umfasst, **dadurch gekennzeichnet**
das aufpralldämpfende Element (94, 105) sich ausdehnt, wenn der Insassensitz (31, 31B, 31C, 31D) von der Fahrzeugkarosserie (11) gelöst wird, und
der Insassensitz eine Beschränkungseinrichtung (163, 197, 208) umfasst, um den Insassensitz davon abzuhalten, nach vorne gelöst zu werden.

2. Insassen-Rückhaltevorrichtung für das Motorrad nach Anspruch 1, **dadurch gekennzeichnet, dass** das aufpralldämpfende Element ein Airbag (117) ist.

3. Insassen-Rückhaltevorrichtung für das Motorrad nach einem der Ansprüche 1 bis 2, **dadurch gekennzeichnet, dass** der Lösemechanismus (40) ansprechend auf das Erfassen des Umfallens des Fahrzeugs von der Fahrzeugkarosserie (11) gelöst wird und die Erfassung des Umfallens einen Neigungswinkel der Fahrzeugkarosserie (11) und/oder eine Sitzlast und/oder eine Fußrastenlast erfasst, um die Neigung der Fahrzeugkarosserie (11) und einen Zustand des Insassen (85) mit Hilfe eines an der Fahrzeugkarosserie (11) bereitgestellten Steuerabschnitts zu bestimmen.

4. Insassen-Rückhaltevorrichtung für das Motorrad nach einem der Ansprüche 1 bis 3, **dadurch gekennzeichnet, dass** eine auf dem Sitzgurt (32) bereitgestellte Zunge (61) abnehmbar mit einer Schnalle (62) verbunden ist, die auf dem Insassensitz (31, 31B, 31C, 31D) bereitgestellt ist, und ein Sitzgurterfassungsabschnitt an der Schnalle (62) bereitgestellt ist, so dass der Sitzgurterfassungsabschnitt ein Signal an einen an der Fahrzeugkarosserie (11) bereitgestellten Warnnachrichtenabschnitt sendet, wenn der Sitzgurterfassungsabschnitt erfasst, dass der Insasse (85) den Sitzgurt (32) bisher nicht trägt, so dass der Warnnachrichtenabschnitt eine Sitzgurttragewarnung an den Insassen (85) ausgibt.

## Revendications

1. Appareil de retenue d'un occupant pour un motocycle (10) qui inclut un siège d'occupant (31, 31B, 31C, 31D) disposé sur une carrosserie de véhicule (11) et adapté pour asseoir un occupant (85) et une ceinture de sécurité (32) disposée sur ledit siège d'occupant (31, 31B, 31C, 31D) et adaptée pour fixer l'occupant (85), dans lequel
ledit siège d'occupant (31, 31B, 31C, 31D) inclut un mécanisme de détachement (40) qui permet son détachement de la carrosserie de véhicule (11) conjointement avec l'occupant (85) lorsque le véhicule chute,
ledit siège d'occupant (31, 31B, 31C, 31D) inclut un organe d'absorption de chocs (94, 105) construit dans une portion arrière de celui-ci, **caractérisé en ce que**
ledit organe d'absorption de chocs (94, 105) se dilate lorsque ledit siège d'occupant (31, 31B, 31C, 31D) est détaché de la carrosserie de véhicule (11), et
ledit siège d'occupant inclut un moyen de restriction (163, 197, 208) pour arrêter le détachement vers l'avant du siège d'occupant.

2. Appareil de retenue d'occupant pour le motocycle selon la revendication 1, **caractérisé en ce que** ledit organe d'absorption de chocs est un coussin d'air gonflable (117).

3. Appareil de retenue d'occupant pour le motocycle selon l'une quelconque des revendications 1 à 2, **caractérisé en ce que** ledit mécanisme de détachement (40) est détaché de la carrosserie de véhicule (11) en réponse à la détection d'une chute du véhicule, et la détection de chute détecte au moins un élément parmi un angle d'inclinaison de la carrosserie de véhicule (11), une charge sur siège et une charge sur marchepied pour décider de l'inclinaison de la carrosserie de véhicule (11) et d'un état de l'occupant (85) au moyen d'une section de commande prévue sur la carrosserie de véhicule (11).

4. Appareil de retenue d'occupant pour le motocycle selon l'une quelconque des revendications 1 à 3, **caractérisé en ce qu'**une languette (61) disposée sur ladite ceinture de sécurité (32) est raccordée de façon amovible à une boucle (62) disposée sur ledit siège d'occupant (31, 31B, 31C, 31D) et une section de détection de ceinture de sécurité est disposée sur ladite boucle (62) de sorte que, lorsque ladite section de détection de ceinture de sécurité détecte que l'occupant (85) ne porte pas encore ladite ceinture de sécurité (32), ladite section de détection de ceinture de sécurité envoie un signal à une section de notification d'avertissement disposée sur la carrosserie de véhicule (11), de sorte que ladite section de notification d'avertissement émet un avertissement de port de ceinture de sécurité à l'occupant (85).
